# EUROPEAN PATENT SPECIFICATION

(11) **EP 4 624 875 B1**
(45) Date of publication and mention of the grant of the patent: **13.05.2026**
(21) Application number: 25167258.0
(22) Date of filing: 31.03.2025
(51) Int. Cl.: G01G 21/28

(54) **ELECTRONIC BALANCE**
ELEKTRONISCHE WAAGE
BALANCE ÉLECTRONIQUE

(30) Priority: 29.03.2024 JP 2024055386
(43) Date of publication of application: 01.10.2025
(73) Proprietor: A&D Company, Limited, Tokyo 170-0013 (JP)
(72) Inventor: ODA, Hisanori, Saitama, 170-0013 (JP)
(74) Representative: dompatent

(56) References cited:
- US-A1- 2011 132 669

## Description

### Technical Field

The present invention relates to an electronic balance that automatically opens and closes sliding doors as a pair of right and left side plates of a windshield forming a weighing chamber.

### Background Art

Conventionally, various mechanisms have been proposed as mechanisms for automatically opening and closing sliding doors which are a pair of right and left side plates of a windshield forming a weighing chamber. For example, Patent Literature 1 discloses a precision balance in which sliding windows as side plates are made movable in synchronization in a lateral direction by a plate movably supported below a weighing chamber and a grip with a lock fixed to the plate, and a motor drive device that moves the plate is connected to the plate. Then, the motor drive device is positioned in a balance case that accommodates a weighing mechanism and has substantially the same size as that of the weighing chamber and is provided at a rear portion of the weighing chamber, and is fixed to a rear wall of the weighing chamber, and a pinion fixed to a tip end of a rotation drive shaft of the motor is engaged with a rack provided on the plate. As a result, the rotation drive shaft of the motor drive device rotates to move the plate in the front-rear direction of the weighing chamber, which moves the sliding window in the same direction to open and close it.

### Citation List

### Patent Literature

Patent Literature 1: Japanese Published Unexamined Utility Model Application No. S62-140328

Further prior art is disclosed by patent document US 2011/0132669A1.

### Summary of Invention

### Technical Problem

However, in the precision balance of Patent Literature 1, since the motor drive device is accommodated in the balance case provided at the rear of the weighing chamber, the precision balance becomes large in the front-rear direction due to the presence of the case, and this causes a problem that downsizing is difficult. The present invention has been made in view of the above-described problem, and an object thereof is to provide an electronic balance that can be downsized and includes a windshield having sliding doors as a pair of side plates to be automatically opened and closed.

### Solution to Problem

In order to achieve the above-described object, according to a preferred first aspect of the electronic balance of the present invention, the electronic balance includes: an accommodation case in which a weighing mechanism joined to a weighing pan is disposed; a windshield including an upper face plate, a front face plate, a back face plate, and a pair of right and left side plates, for covering the weighing pan to form a weighing chamber above the accommodation case, where at least the pair of right and left side plates are sliding doors slidable in a front-rear direction of the accommodation case; a pair of suspension mechanisms configured to suspend and support the pair of right and left sliding doors in a slidable manner, respectively and individually; a linkage mechanism configured to link the pair of right and left sliding doors at their lower portions in an engageable and disengageable manner; and an air cylinder disposed in the accommodation case and configured to link a piston rod to the linkage mechanism and slide the pair of right and left sliding doors via the linkage mechanism.

According to this configuration, since the rod of the air cylinder is linked to the linkage mechanism that links the pair of right and left sliding doors, the pair of right and left sliding doors can be automatically slid in conjunction with each other by driving the air cylinder and protruding and withdrawing the piston rod of the air cylinder. In addition, since the air cylinder is provided in the accommodation case positioned below the weighing chamber, the conventional case provided at the rear of the weighing chamber for accommodating the weighing mechanism and motor drive mechanism becomes unnecessary. When only one of the pair of right and left sliding doors is linked to the linkage mechanism, only this one sliding door can be slid.

Further, in a second aspect, in addition to the first aspect, a pump that is a drive source of the air cylinder is disposed in the accommodation case. According to this aspect, the electronic balance is more remarkably downsized. In addition, since it is not necessary to provide the pump in a place separate from the accommodation case, the entire configuration is compact and easy to use.

Furthermore, in a third aspect, in addition to the configuration of the second aspect, the air cylinder and the pump are disposed in the accommodation case in a vertically overlapping state. According to this aspect, an area occupied by the air cylinder and the pump in the accommodation case can be minimized.

Furthermore, in a fourth aspect, in addition to the configuration of the second aspect, the air cylinder and the pump are disposed parallel in the accommodation case. According to this aspect, a height occupied by the air cylinder and the pump in the accommodation case can be minimized.

### Advantageous Effects of Invention

According to the electronic balance of the present invention, since an extra case previously existing at the rear portion of the weighing chamber no longer becomes necessary, downsizing is possible, and the sliding doors that are a pair of right and left side plates constituting the windshield can be automatically opened and closed in conjunction with each other or individually.

### Brief Description of Drawings

FIG. 1 is a perspective view illustrating a state in which one of sliding doors of an electronic balance according to a first embodiment of the present invention is opened.
FIG. 2 is a partially omitted perspective view illustrating a suspension mechanism.
FIG. 3 is a partially omitted perspective view illustrating a linked state between an air cylinder and an engagement/disengagement member.
FIG. 4 is a partially omitted perspective view illustrating a disposed state of the air cylinder in a lower case frame.
FIG. 5 is a perspective view illustrating a connection member fixed to the sliding door.
FIG. 6 is an exploded perspective view of the engagement/disengagement member.
FIGS. 7A, 7B, and 7C are operation explanatory views of the engagement/disengagement member.
FIG. 8 is a partially omitted perspective view illustrating a disposed state of a pump in an accommodation case.
FIG. 9 is a block diagram illustrating a connection relationship between the air cylinder, the pump, and an electromagnetic valve.
FIG. 10 is a perspective view illustrating a disposed state of an air cylinder, a pump, and an electromagnetic valve according to a second embodiment.

### Description of Embodiments

Hereinafter, a first embodiment of the present invention will be described with reference to the accompanying drawings.

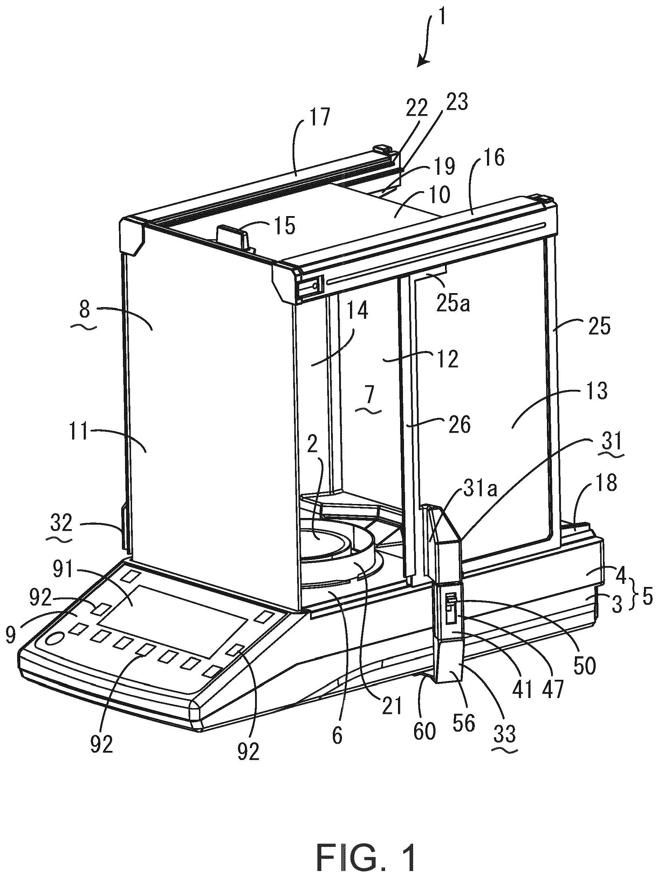

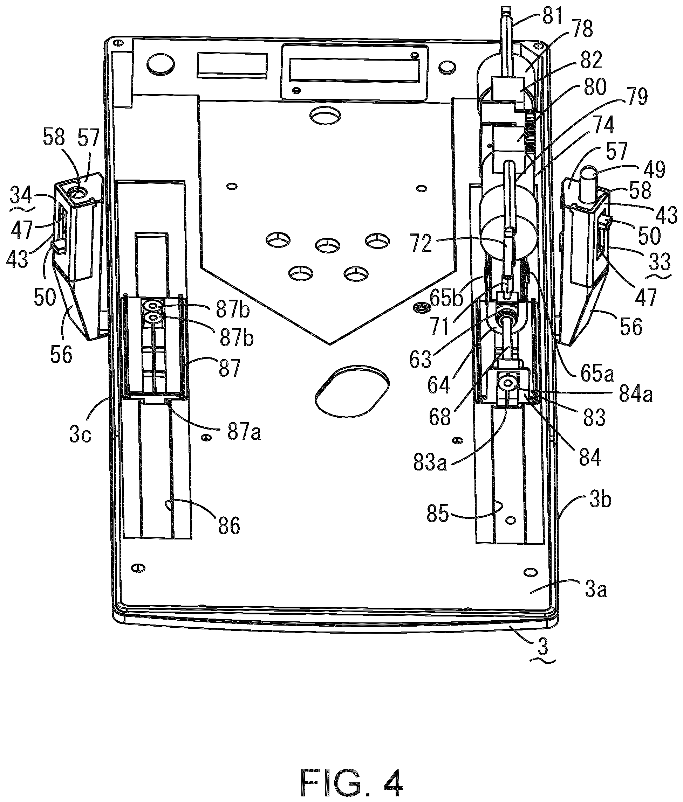

As illustrated in FIG. 1, the electronic balance 1 includes an accommodation case 5 that accommodates a weighing mechanism (not illustrated) including a mass sensor of an electromagnetic balance type, a load cell type or the like connected to a weighing pan 2, and a control unit (not illustrated) for controlling various operations of the electronic balance 1 provided inside, and is formed of a lower case frame 3 having a bottom plate 3a (see FIG. 4) and an upper case frame 4 having a top plate, and the weighing pan 2 is positioned above a floor plate 6 that doubles as the top plate of the upper case frame **4.** Also, the electronic balance 1 includes a windshield 8 for covering the weighing pan 2 to form a weighing chamber 7 above the accommodation case 5. A ring-shaped windshield ring 21 that serves to prevent the weighing pan 2 from being affected by wind is fixed to an upper surface of the floor plate 6. A control panel 9 is provided on a front surface side of the accommodation case 5. This control panel 9 includes, on its upper surface, a display unit 91 that displays a weighing result and a state, and a plurality of touch panel type various operation switches 92.

The windshield 8 prevents the flow of air at the time of weighing, for example, air from an air conditioner, the breath of a person at the time of weighing, the flow of air generated when a person walks, and the like from acting as a wind pressure on a load applying portion centered on the weighing pan 2 and affecting weighing. The windshield 8 includes an upper face plate 10, a front face plate 11, a back face plate 12, and sliding doors 13 and 14 as a pair of right and left side plates, and the upper face plate 10, the right sliding door 13, and the left sliding door 14 are provided to be slidable in the front-rear direction of the accommodation case 5. The pair of right and left sliding doors 13 and 14 are automatically opened and closed. A handle 15 to be gripped at the time of a manual sliding operation is attached to the upper face plate 10. The upper face plate 10, the front face plate 11, the back face plate 12, and the right and left sliding doors 13 and 14 are made of transparent glass or resin so that an internal state can be observed. Further, in order to prevent generation of static electricity, the glass is desirably electrically conductive glass having an electrically conductive film provided on the surface, and the resin is desirably electrically conductive resin having electrical conductivity.

A lower end of the front face plate 11 is fixed to the floor plate 6, and corner portions at an upper end are fixed to front end surfaces of a pair of support cases 16 and 17 which are provided at an upper portion of the windshield 8 and have bottom surfaces whose central portions in width directions are opened along longitudinal directions of the support cases. Rear end sides of the pair of support cases 16 and 17 are fixed to upper ends of support plates 18 and 19 having lower ends fixed to the floor plate 6. In FIG. 1, only a lower end of the support plate 18 and an upper end of the support plate 19 are in a visible state. The back face plate 12 has both side ends fixed to the support plates 18 and 19, a lower end fixed to the floor plate 6, and both upper end corner portions fixed to the support cases 16 and 17. The upper face plate 10 is slidable in the front-rear direction of the electronic balance 1 by being guided at both side ends by guiderails 22 and 23 (illustrated only for the support case 17) provided on side surfaces facing each other of the support cases 16 and 17, and when positioned at the rearmost side, the upper surface of the weighing chamber 7 is fully opened, and when positioned at the foremost side where the upper face plate comes into contact with an upper portion of the front face plate 11, the upper surface of the weighing chamber 7 is closed.

Next, the right and left sliding doors 13 and 14 will be described together with their suspension mechanisms, and since the right sliding door 13 and the left sliding door 14 having the same configuration are disposed symmetrically, only the right sliding door 13 will be described, and description of the left sliding door 14 will be omitted.

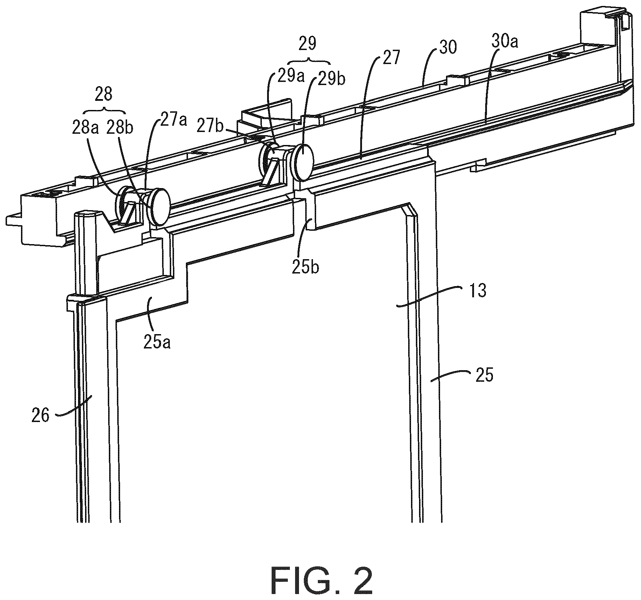

As illustrated in FIGS. 1 and 2, the right sliding door 13 has a protective frame 25 on its peripheral edge. The protective frame 25 has a bent portion 25a bent in a crank shape at an upper left side (front face plate 11 side) so as to expose an upper left corner portion of the right sliding door 13, and has a notched portion 25b that divides the protective frame into right and left portions at the center of the upper portion. An auxiliary plate 26 whose planar shape is an L shape is fixed to a left side portion of the protective frame 25, and the auxiliary plate 26 comes into contact with the front face plate 11 when the right sliding door 13 is closed.

As illustrated in FIG. 2, a guide member 27 provided with bearing portions 27a, 27b is fixed to an upper surface of the protective frame 25. An end of the guide member 27 on the front face plate 11 side extends downward and is fixed onto the bent portion 25a. Guide rollers 28 and 29 respectively having pairs of rollers 28a, 28b and 29a, 29b are supported by the bearing portions 27a and 27b so as to be rotatable about respective rotation shafts. The respective rollers 28a, 28b, 29a, and 29b of the guide rollers 28, 29 are placed on guiderails 30a provided at lower ends of a pair of fixation frames 30 (Only the fixation frame at the roller 28a, 29a side is illustrated) provided so as to face each other inside the support case 16. As a result, the right sliding door 13 is suspended and supported by the support case 16, and a lower end of the right sliding door 13 is at a position slightly away from the floor plate 6. As the rollers 28a, 28b, 29a, and 29b rotate, the right sliding door 13 is moved in the front-rear direction via the guide member 27 and the protective frame 25 in accordance with the rotation direction of the rollers.

Next, a linkage mechanism for linking the pair of right and left sliding doors 13 and 14 at their lower portions in an engageable/disengageable manner will be described.

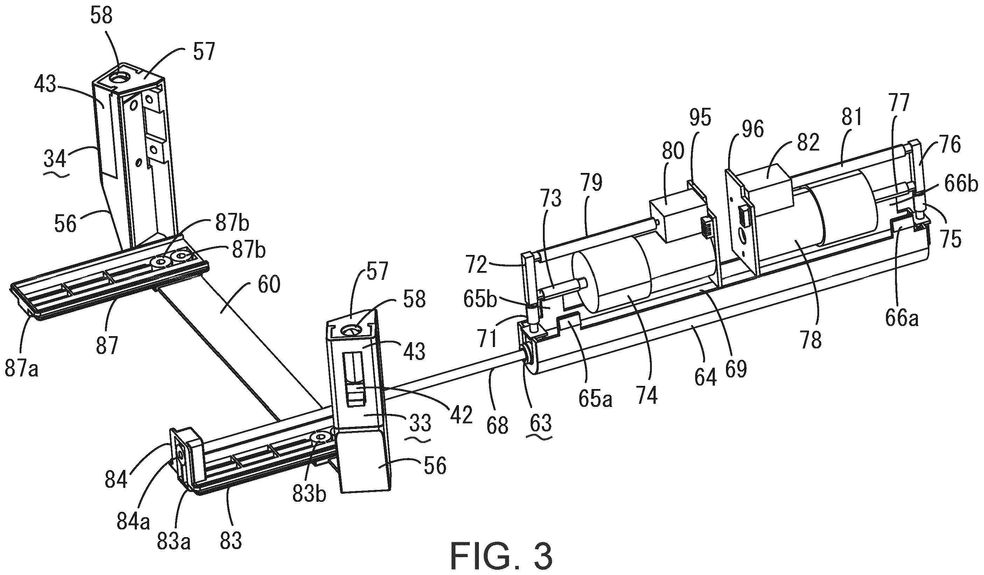

As illustrated in FIG. 1, engagement/disengagement members 33 and 34 (see FIGS. 3 and 4) are disengageably engaged with connection members 31 and 32 that double as handles of the right and left sliding doors 13 and 14. Since the engagement/disengagement members 33 and 34 and the connection members 31 and 32 have the same configurations, only the configurations of the connection member 31 and the engagement/disengagement member 33 on the right sliding door 13 side will be described, and corresponding components in the configuration on the sliding door 14 side will be denoted by the same reference signs, and a detailed description thereof will be omitted.

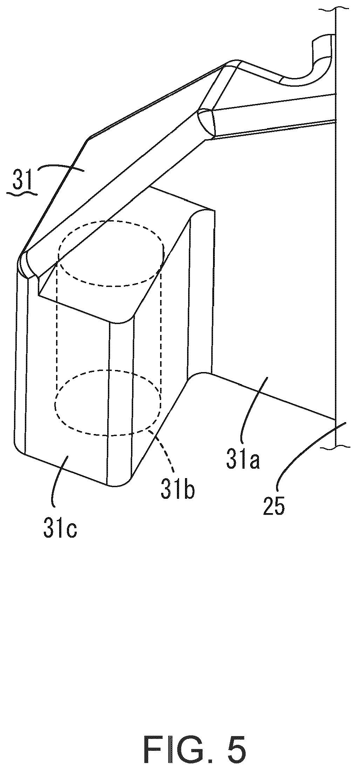

As illustrated in FIG. 5, the connection member 31 includes a fixing portion 31a and a connecting portion 31c that has a block shape and is provided with an oval hole 31b having an oval planar shape and extending upward from a lower surface. As illustrated in FIGS. 1 and 5, the connection member 31 is fixed to the auxiliary plate 26 side of the protective frame 25 of the right sliding door 13 so as to be obliquely positioned at the fixing portion 31a in an inclined manner in a closing movement direction of the right sliding door 13.

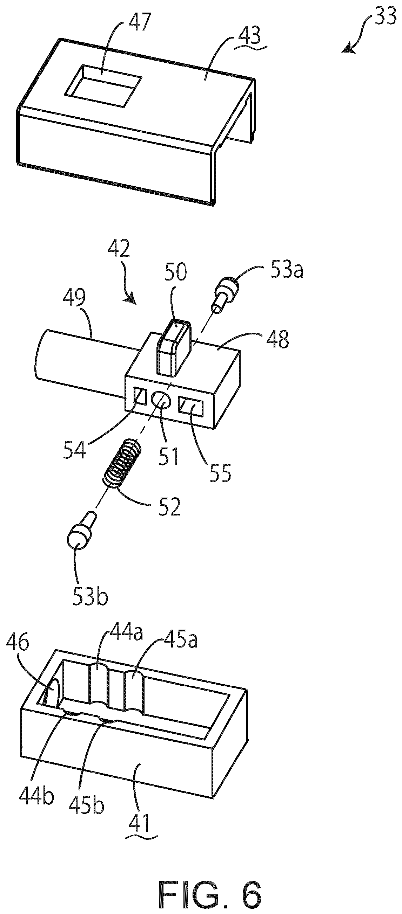

As illustrated in FIG. 6, the engagement/disengagement member 33 includes a housing main body 41 having a hollow-quadrangular shape as a whole, a moving body 42 disposed in the housing main body 41 so as to be slidable in its longitudinal direction, and a housing cover 43 having a U-shaped cross section fixed to the housing main body 41 so as to close one open surface thereof. Recessed grooves 44a, 44b and 45a, 45b each having a semicircular cross section are formed at intervals in the longitudinal direction on a pair of side wall inner surfaces facing each other of the housing main body 41. A circular hole 46 is provided in one side wall positioned at a longitudinal end of the housing main body 41. The housing cover 43 is provided with a rectangular through hole 47. As illustrated in FIGS. 3 and 4, the housing cover 43 is fixed to a frame-shaped support body 56 having an upper surface 57. A circular hole 58 is provided in the upper surface 57 of the support body 56. The engagement/disengagement member 33 and the engagement/disengagement member 34 on the left sliding door 14 side are fixed to both ends of a joint plate 60 extending along an outer surface of the bottom plate 3a of the lower case frame 3 at a lower end of the support body 56.

As illustrated in FIG. 6, the moving body 42 includes a rectangular parallelepiped main body 48, and a columnar protrusion 49 and an operation knob 50 are provided on the main body 48. The moving body 42 is provided with a lateral hole 51 that is positioned corresponding to the operation knob 50 and penetrates through the moving body in the lateral direction, and positioning members 53a and 53b having a columnar base portion and a pair of hemispherical tip end portions that are resiliently biased toward the outside of the lateral hole 51 by a coil spring 52 are disposed in the lateral hole 51. The respective positioning members 53a and 53b are in elastic contact with the side wall inner surfaces of the housing main body 41 on which the recessed grooves 44a, 44b, 45a, and 45b are provided due to a resilient force of the coil spring 52. The operation knob 50 protrudes from the through hole 47 of the housing cover 43, and the protrusion 49 protrudes from and withdraws into the circular hole 46 of the housing main body 41. The circular hole 46 is positioned corresponding to the circular hole 58 provided in the upper surface 57 of the support body 56. In order to reduce the weight, the main body 48 is provided with square holes 54 and 55 extending parallel to the lateral hole 51.

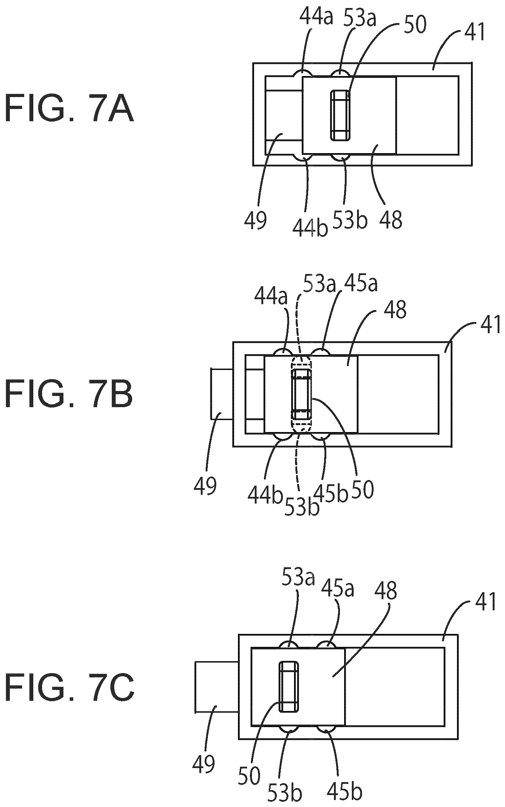

As illustrated in FIG. 7, by gripping the operation knob 50 and moving the operation knob 50 inside the through hole 47, the main body 48 of the moving body 42 moves inside the housing main body 41 while the respective positioning members 53a and 53b are in elastic contact with the side wall inner surfaces of the housing main body 41, and causes the protrusion 49 to protrude from and withdraw into the circular hole 46 (see FIG. 6) according to the moving direction. During this movement, the state illustrated in FIG. 7C in which the positioning members 53a and 53b are fitted into the recessed grooves 44a and 44b corresponds to the most protruding position of the protrusion 49, and the state illustrated in FIG. 7A in which the positioning members 53a and 53b are fitted into the recessed grooves 45a and 45b corresponds to the most withdrawing position of the protrusion 49, and the movable body 42 is positioned at these two positions.

Therefore, in the connection member 31 and the engagement/disengagement member 33 positioned corresponding to each other, when the operation knob 50 of the engagement/disengagement member 33 in the state illustrated in FIG. 7A is moved upward in FIGS. 1 and 3, the positioning members 53a and 53b are disengaged from the recessed grooves 45a and 45b, and are fitted into the recessed grooves 44a and 44b through the state illustrated in FIG. 7B, the state illustrated in FIG. 7C is reached, and the protrusion 49 protrudes most from the inside of the housing main body 41 and enters the hole 31b of the connection member 31, and accordingly, the engaged state illustrated in FIG. 1 is reached. At this time, since the hole 31b has an oval planar shape, it is easy to position the protrusion 49 during the entering operation. By putting the pair of right and left sliding doors 13 and 14 into the engaged state, the right and left sliding doors 13 and 14 are put into a linked state and can be automatically opened and closed in conjunction with each other. When only one of the right and left sliding doors 13 and 14 is put into the engaged state, only the sliding door in the engaged state can be automatically opened and closed.

Subsequently, an air cylinder that opens and closes the right and left sliding doors 13 and 14 and a drive source of the air cylinder will be described.

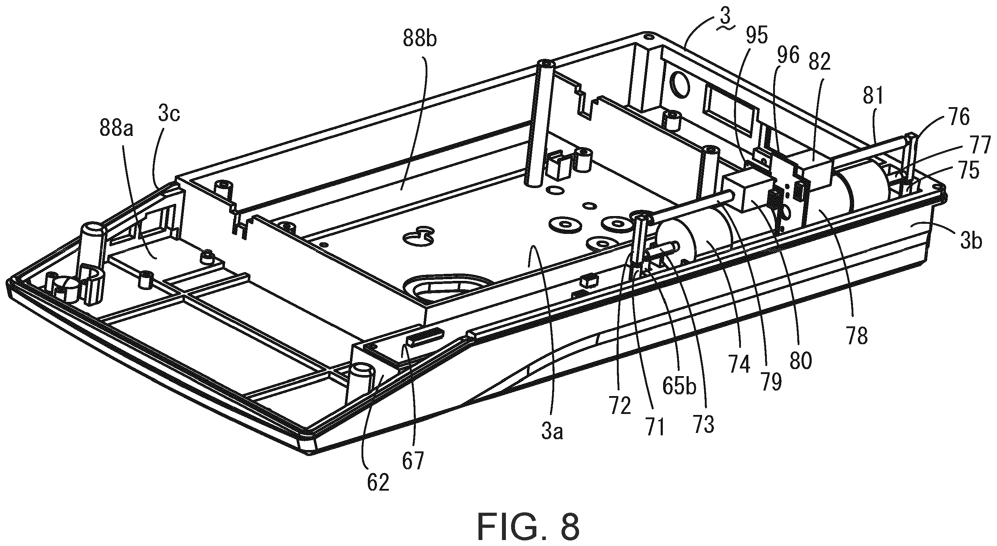

As illustrated in FIG. 8, a cylinder box 62 having an open bottom surface is provided along a right side wall 3b in the bottom of the lower case frame 3. As illustrated in FIGS. 3 and 4, an air cylinder 63 as a driving means for opening and closing the right and left sliding doors 13 and 14, is accommodated in the cylinder box 62 so as to be positioned parallel to the right and left sliding doors 13 and 14. The air cylinder 63 is fixed in a holding frame 64 (see FIG. 3) having a U-shaped cross section and having pairs of right and left fixing claws 65a, 65b and 66a, 66b provided in a protruding manner on upper surfaces of both end portions, and is fixed to the cylinder box 62 by the fixing claws 65a, 65b and 66a, 66b entering and being locked in the lock holes (not illustrated) of a top plate 67 of the cylinder box 62. By disposing the air cylinder 63 in the cylinder box 62, entry of dust from the air cylinder 63 into the weighing chamber 7 and transmission of aerial vibration are prevented.

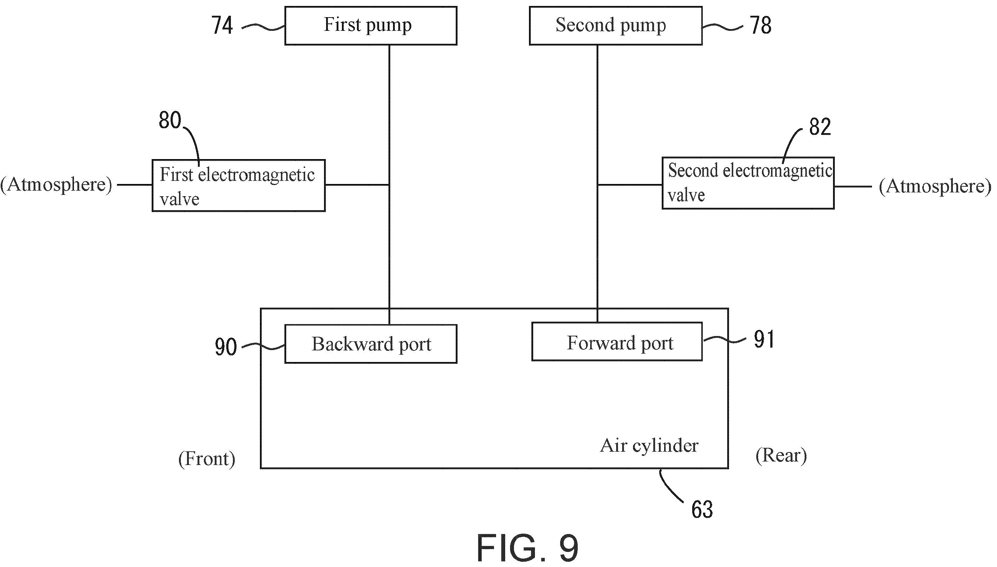

As illustrated in FIG. 9, the air cylinder 63 is a double-acting type, and both of the forward motion and the backward motion of the reciprocating motion of the piston rod 68 are performed by air pressure. Therefore, ports for sending air into the air cylinder 63 are provided at two front and rear positions. A backward port 90 for moving the piston rod 68 backward by the sent air is provided at the front side of a cylinder tube 69 including a piston (not illustrated) provided with a piston rod 68. Similarly, a forward port 91 for feeding the piston rod 68 forward is provided at the rear side of the cylinder tube 69.

As illustrated in FIGS. 3 and 8, a piping tube 71 connected to the backward port 90 is connected to a first pump 74 attached to the top plate 67 of the cylinder box 62 via a connection pipe 72 and a piping tube 73. A piping tube 75 connected to the forward port 91 is connected to a second pump 78 attached to the top plate 67 of the cylinder box 62 via a connection pipe 76 and a piping tube 77. The first pump 74 is connected to a first electromagnetic valve 80 that controls flowing and stoppage of air via the piping tube 73, the connection pipe 72, and a piping tube 79. The second pump 78 is connected to a second electromagnetic valve 82 that controls flowing and stoppage of air via the piping tube 77, the connection pipe 76, and a piping tube 81. The first electromagnetic valve 80 is fixed to the first pump 74 by a fixing plate 95 vertically fixed to the top plate 67, and the second electromagnetic valve 82 is fixed to the second pump 78 by a fixing plate 96 vertically fixed to the top plate 67. Each of the pumps 74 and 78 is disposed above the air cylinder 63 in a state where each of the pumps 74 and 78 vertically overlaps the air cylinder 63, and a portion excluding a lower portion of each of the pumps 74 and 78 is positioned corresponding to the upper case frame 4 of the accommodation case 5.

FIG. 9 is a block diagram illustrating a connection relationship between the air cylinder 63 described above and each of the pumps 74 and 78 and each of the electromagnetic valves 80 and 82, and both of the first pump 74 and the second pump 78 are air pumps. The first pump 74 and the second pump 78 are drive sources of the air cylinder 63, and compress the air and send the compressed air to the air cylinder 63 and move the piston by the air pressure to open and close the sliding doors 13 and 14 via the joint plate 60, the engagement/disengagement members 33 and 34, and the connection members 31 and 32 linked to the piston rod 68. In the first electromagnetic valve 80 and the second electromagnetic valve 82, an outlet side of the valve is opened to the atmosphere, and flowing and stoppage of air is controlled by opening and closing the valve. The second pump 78 is connected to the forward port 91 provided at the rear side of the air cylinder 63, a branch is provided halfway, and the second electromagnetic valve 82 is connected to this branch. The first pump 74 is connected to the backward port 90 provided at the front side of the air cylinder 63, a branch is provided halfway, and the first electromagnetic valve 80 is connected to this branch.

Here, linkage between the air cylinder 63 and the linkage mechanism will be described.

As illustrated in FIGS. 3 and 4, a male screw (not illustrated) is formed on a tip end of the piston rod 68 of the air cylinder 63, and this male screw is screwed to a female screw portion 84a formed in a rising portion 84 provided at one end of a guide plate 83. As illustrated in FIG. 4, the guide plate 83 is engaged at an engagement protrusion 83a provided on a bottom surface with a guide hole 85 provided in the bottom plate 3a of the lower case frame 3 along the right side wall 3b at a position corresponding to an open bottom surface of the cylinder box 62, and is movable by being guided by the guide hole 85. A guide hole 86 extending parallel to the guide hole 85 along a left side wall 3c is formed in the bottom plate 3a of the lower case frame 3. A guide plate 87 is engaged with the guide hole 86 at an engagement protrusion 87a provided on a bottom surface of the guide plate 87, and the guide plate 87 is movable along the guide hole 86. The guide plate 87 has the same configuration as that of the guide plate 83 except for the presence or absence of the rising portion 84. The one guide hole 86 and the guide plate 87 are covered with covers 88a and 88b (see FIG. 8) that allow movement of the guide plate 87 provided in the bottom plate 3a. The other guide hole 85 is covered with the cylinder box 62 and does not need a cover.

The guide plates 83 and 87 are fixed at their bottom surfaces exposed to the outside from the guide holes 85 and 86 to the joint plate 60 extending perpendicularly to the guide holes 85 and 86 along the outer surface of the bottom plate 3a of the lower case frame 3. Both ends of the joint plate 60 are positioned outside of both side walls 3b and 3c of the accommodation case 5, and are respectively fixed to lower end portions of the engagement/disengagement members 33 and 34 positioned correspondingly. As described above, the engagement/disengagement members 33 and 34 link the joint plate 60 to the pair of right and left sliding doors 13 and 14 in an engageable/disengageable manner, and engage in a disengageable manner with the connection members 31 and 32 that double as handles of the respective right and left sliding doors 13 and 14.

Next, opening and closing operations of the right and left sliding doors 13 and 14 in the present embodiment will be described.

First, in a state where each of the sliding doors 13, 14 is closed, the connection member 31, 32 and the engagement/disengagement member 33, 34 on the sliding door 13, 14 side desired to be automatically opened and closed are put into an engaged state. Here, when it is desired to open and close the right and left sliding doors 13 and 14 in conjunction with each other, the connection member 31, 32 and the engagement/disengagement member 33, 34 of each of the sliding doors 13 and 14 are put into an engaged state. Then, when the second electromagnetic valve 82 is opened, the first electromagnetic valve 80 is closed, and the first pump 74 is activated, air flows into the air cylinder 63 from the backward port 90 of the air cylinder 63 and causes pressurization, so that the piston rod 68 withdraws into the cylinder tube 69, and the guide plate 83, the joint plate 60, and the guide plate 87 also move in the same direction, and the sliding doors 13, 14 move rearward (toward the back face plate 12) via the engagement/disengagement members 33 and 34 and the connection members 31 and 32 and reach an opened state. On the other hand, to close the sliding doors 13 and 14, when the first electromagnetic valve 80 is opened, the second electromagnetic valve 82 is closed, and the second pump 78 is activated, the piston rod 68 protrudes from the inside of the cylinder tube 69 in reverse to the above description, so that the sliding doors 13 and 14 move forward (toward the front face plate 11) and reach a closed state.

Further, when it is desired to automatically open and close only one sliding door, for example, the right sliding door 13, the same operation as described above may be performed while only the connection member 31 and the engagement/disengagement member 33 on the right sliding door 13 side are put into an engaged state, and the connection member 32 and the engagement/disengagement member 34 on the left sliding door 14 side are put into a disengaged state.

Further, in a case where it is desired to manually open and close the sliding doors 13 and 14, and when it is desired to interlock the sliding doors 13 and 14, it suffices that the connection members 31 and 32 and the engagement/disengagement members 33 and 34 of the sliding doors 13 and 14 are put into an engaged state, and both of the first electromagnetic valve 80 and the second electromagnetic valve 82 are opened to enable the atmosphere to flow into and out of the cylinder tube 69, and enable the piston rod 68 to move inside the cylinder tube 69 without air resistance. When it is desired to open and close only one sliding door without interlocking, for example, it suffices that the connection member 31 and the engagement/disengagement member 33 on at least one side are put into a disengaged state in order to release the linkage between the sliding doors 13 and 14. However, in this case, it is also necessary to open both of the first electromagnetic valve 80 and the second electromagnetic valve 82 to enable the atmosphere to flow into and flow out of the cylinder tube 69. Here, when the connection members 31 and 32 and the engagement/disengagement members 33 and 34 on both sliding door 13 and 14 sides are put into a disengaged state, it is not necessary to open the first electromagnetic valve 80 and the second electromagnetic valve 82 since they are not affected by the air cylinder 63.

In the present embodiment, since the air cylinder 63, the pumps 74 and 78, and the electromagnetic valves 80 and 82 are disposed in a vertically overlapping state and are accommodated in the accommodation case 5, it is possible to minimize the area occupied by the air cylinder 63, the pumps 74 and 78, and the electromagnetic valves 80 and 82 in the accommodation case 5, and it is possible to downsize the entire electronic balance 1.

Next, a second embodiment relating to disposition of the air cylinder, the pumps, and the electromagnetic valves of the present invention will be described.

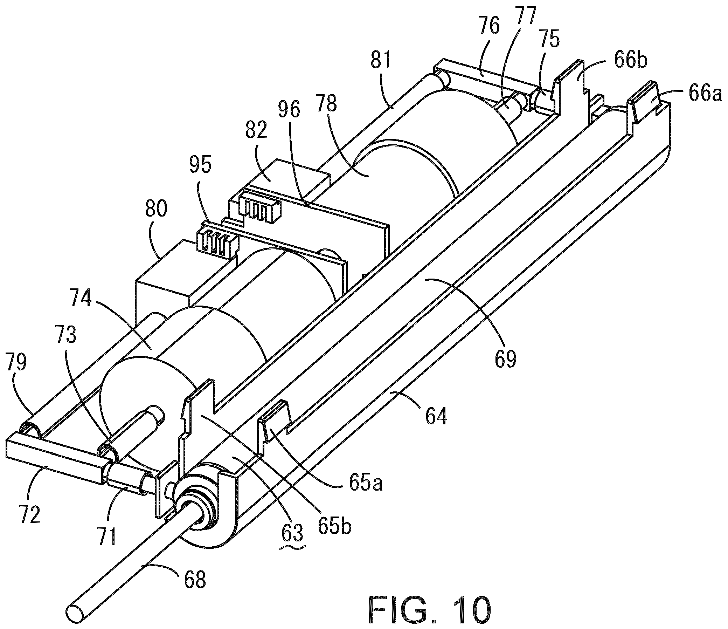

As illustrated in FIG. 10, since the configurations of the air cylinder, the pumps, and the electromagnetic valves are the same as the configurations of the air cylinder 63, the first pump 74, the second pump 78, the first electromagnetic valve 80, and the second electromagnetic valve 82 of the first embodiment described above, the corresponding components are denoted by the same reference signs, and a detailed description thereof is omitted. The present embodiment is different from the first embodiment in that the pumps 74 and 78, the electromagnetic valves 80 and 82, and components accompanying these are provided in the lower case frame 3 in a state where these components are displaced leftward by 90 degrees with respect to the air cylinder 63 as viewed from the piston rod 68 side. Therefore, although the forward port 91 and the backward port 90 are provided at the upper side of the cylinder tube 69 in the first embodiment, they are provided at a lateral side on the side opposite to the side wall 3b of the lower case frame 3 of the cylinder tube 69 in the present embodiment.

According to this embodiment, since the air cylinder 63, the pumps 74 and 78, and the electromagnetic valves 80 and 82 are arranged parallel and are housed in the lower case frame 3, the height of the accommodation case 5 can be set to substantially the same height as that of the lower case frame 3, and by minimizing the height occupied by the air cylinder 63, the pumps 74 and 78, and the electromagnetic valves 80 and 82 in the accommodation case 5, the entire electronic balance 1 can be reduced in height and downsized.

Although preferred embodiments of the present invention have been described above, the present invention is not limited to the above-described embodiments, and can be variously modified. For example, the accommodation case 5 is not limited to the configuration in which the lower case frame 3 and the upper case frame 4 are combined. Also, the upper face plate 10 may be configured to be linked to a linkage mechanism such that the upper face plate 10 is also opened and closed in conjunction with the right and left sliding doors or individually by an operation of the air cylinder 63.

### Reference Signs List

- 1: Electronic Balance
- 2: Weighing pan
- 3: Lower case frame
- 4: Upper case frame
- 5: Accommodation case
- 6: Floor plate
- 7: Weighing chamber
- 8: Windshield
- 9: Control panel
- 10: Upper face plate
- 11: Front face plate
- 12: Back face plate
- 13: Right sliding door
- 14: Left sliding door
- 16,17: Support case
- 18,19: Support plate
- 22,23: Guiderail
- 25: Protective frame
- 27: Guide member
- 28, 29: Guide roller
- 30: Fixation frame
- 31,32: Connection member
- 33,34: Engagement/disengagement member
- 60: Joint plate
- 63: Air cylinder
- 68: Piston rod
- 74: First pump
- 78: Second pump
- 80: First electromagnetic valve
- 82: Second electromagnetic valve
- 83,87: Guide plate
- 84: Rising portion
- 85,86: Guide hole

## Claims

1. An electronic balance comprising:
an accommodation case (5) in which a weighing mechanism joined to a weighing pan (2) is disposed;
a windshield (8) including an upper face plate, a front face plate, a back face plate, and a pair of right and left side plates, for covering the weighing pan to form a weighing chamber above the accommodation case, where at least the pair of right and left side plates (13, 14) are sliding doors slidable in a front-rear direction of the accommodation case;
a pair of suspension mechanisms configured to suspend and support the pair of right and left sliding doors in a slidable manner, respectively and individually;
an air cylinder (63) disposed in the accommodation case;
**characterized by**
a linkage mechanism configured to link the pair of right and left sliding doors at their lower portions in an engageable and disengageable manner; and
the air cylinder configured to link a piston rod to the linkage mechanism and slide the pair of right and left sliding doors via the linkage mechanism.

2. The electronic balance according to claim 1, wherein a pump (74, 78) that serves as a drive source of the air cylinder (63) is disposed in the accommodation case (5).

3. The electronic balance according to claim 2, wherein the air cylinder (63) and the pump (74, 78) are disposed in the accommodation case (5) in a vertically overlapping state.

4. The electronic balance according to claim 2, wherein the air cylinder (63) and the pump (74, 78) are disposed parallel in the accommodation case (5).

## Patentansprüche

1. Elektronische Waage, die aufweist:
ein Aufnahmegehäuse (5), in dem ein mit einer Waagschale (2) verbundener Wiegemechanismus angeordnet ist;
eine Windschutzscheibe (8) mit einer nach oben weisenden Platte, einer nach vorne weisenden Platte, einer nach hinten weisenden Platte und einem Paar aus einer rechten und einer linken Seitenplatte zum Abdecken der Waagschale, um eine Wiegekammer oberhalb des Aufnahmegehäuses zu bilden, wobei zumindest das Paar rechter und linker Seitenplatten (13, 14) Schiebetüren sind, die in einer von vorne nach hinten verlaufenden Richtung des Aufnahmegehäuses verschiebbar sind;
ein Paar von Aufhängungsmechanismen, die so ausgebildet sind, dass sie das Paar aus einer rechten und einer linken Schiebetüre gleitend aufhängen und stützen, und zwar jeweils einzeln;
einen Luftzylinder (63), der in dem Aufnahmegehäuse angeordnet ist;
**gekennzeichnet durch**
einen Verbindungsmechanismus, der so ausgebildet ist, dass er das Paar aus einer rechten und einer linken Schiebetür an ihren unteren Abschnitten in einer einrückbaren und ausrückbaren Weise verbindet; und
den Luftzylinder, der so ausgebildet, dass er eine Kolbenstange mit dem Verbindungsmechanismus verbindet und das Paar aus einer rechten und einer linken Schiebetür über den Verbindungsmechanismus verschiebt.

2. Elektronische Waage nach Anspruch 1, wobei eine Pumpe (74, 78), die als eine Antriebsquelle des Luftzylinders (63) dient, in dem Aufnahmegehäuse (5) angeordnet ist.

3. Elektronische Waage nach Anspruch 2, wobei der Luftzylinder (63) und die Pumpe (74, 78) vertikal überlappend im Aufnahmegehäuse (5) angeordnet sind.

4. Elektronische Waage nach Anspruch 2, wobei der Luftzylinder (63) und die Pumpe (74, 78) parallel im Gehäuse (5) angeordnet sind.

## Revendications

1. Balance électronique comprenant :
un boîtier d'hébergement (5) dans lequel est disposé un mécanisme de pesage relié à un plateau de pesage (2) ; un pare-brise (8) incluant une plaque de face supérieure, une plaque de face avant, une plaque de face arrière et une paire de plaques latérales droite et gauche, pour recouvrir le plateau de pesage pour former une chambre de pesage au-dessus du boîtier d'hébergement, dans lequel au moins la paire de plaques latérales droite et gauche (13, 14) sont des portes coulissantes dans une direction avant-arrière du boîtier d'hébergement ;
une paire de mécanismes de suspension configurés pour suspendre et supporter la paire de portes coulissantes droite et gauche de manière coulissante, respectivement et individuellement ;
un vérin pneumatique (63) disposé dans le boîtier d'hébergement ;
**caractérisée par**
un mécanisme de liaison configuré pour relier la paire de portes coulissantes droite et gauche au niveau de leurs parties inférieures de manière engageable et désengageable ; et
le vérin pneumatique configuré pour relier une tige de piston au mécanisme de liaison et faire coulisser la paire de portes coulissantes droite et gauche via le mécanisme de liaison.

2. Balance électronique selon la revendication 1, dans laquelle une pompe (74, 78) qui sert de source d'entraînement du vérin pneumatique (63) est disposée dans le boîtier d'hébergement (5)

3. Balance électronique selon la revendication 2, dans laquelle le vérin pneumatique (63) et la pompe (74, 78) sont disposés dans le boîtier d'hébergement dans un état de chevauchement vertical.

4. Balance électronique selon la revendication 2, dans laquelle le vérin pneumatique (63) et la pompe (74, 78) sont disposés parallèlement dans le boîtier d'hébergement (5).
